# EUROPÄISCHE PATENTSCHRIFT

(11) **EP 2 248 945 B1**
(45) Veröffentlichungstag und Bekanntmachung des Hinweises auf die Patenterteilung: **20.06.2012**
(21) Anmeldenummer: 10159650.0
(22) Anmeldetag: 12.04.2010
(51) Int. Cl.: D21G 1/02, F16C 13/00, F16C 32/06

(54) **Hydostatisches Stützelement**
Hydrostatic supporting element
Elément d'appui hydrostatique

(30) Priorität: 24.04.2009 DE 102009002627
(43) Veröffentlichungstag der Anmeldung: 10.11.2010
(73) Patentinhaber: Voith Patent GmbH, 89522 Heidenheim (DE)
(72) Erfinder: Hoppermann, Andreas, 41751 Viersen (DE); Dornfeld, Peter, 47809 Krefeld (DE)

(56) Entgegenhaltungen:
- EP-A2- 0 373 942
- EP-A2- 1 279 767
- DE-C1- 19 600 078

## Beschreibung

Die Erfindung betrifft ein hydrostatisches Stützelement, das geeignet ist, in einer Durchbiegungseinstellwalze in einem einen umlaufenden Walzenmantel axial durchsetzenden drehfesten Joch als eine druckfluidbetätigte Zylinder/Kolben-Einheit eine Stützkraft auf die Innenseite des Walzenmantels auszuüben, wobei Hydrostatiktaschen des hydrostatischen Stützelements jeweils über wenigstens eine Drossel oder Kapillare mit Druckfluid versorgt werden. Außerdem betrifft die Erfindung eine Durchbiegungseinstellwalze mit einem Stützelement. Ein Stützelement und eine derartige Walze sind beispielsweise in der EP 1279767 B1 beschrieben.

In Durchbiegungseinstell oder Durchbiegungsausgleichswalzen kommen Stützquellen oder Stützelemente zum Einsatz, die durch eine Versorgungsleitung mit Öldruck beaufschlagt werden. Durch diesen Öldruck wird die jeweilige Stützquelle gegen den rotierenden Walzenmantel gepresst. Da die Kolbenfläche der Stützquelle kleiner ist als die zum Walzenmantel weisende Hydrostatiktaschenfläche, stellt sich ein geringerer Taschenöldruck ein. Die Druckdifferenz zwischen Kolbendruck und Taschendruck bestimmt den Volumenstrom, der über die zwischen die Taschenfläche und die Kolbenfläche geschalteten Kapillaren fließt. Somit stellt sich der jeweilige Volumenstrom an einer Stützquellen in Abhängigkeit vom Kolbendruck ein.

Zur individuellen Profilkorrektur, d.h. insbesondere zur Korrektur bestimmter Eigenschaftsquerprofile, der durch einen Walzenspalt laufenden Warenbahn, insbesondere Papier- oder Kartonbahn, werden die Stützquellen einzeln mit einem Öldruck beaufschlagt. Die Höhe der Öldrücke wird beispielsweise über eine online-Profildickenmessung der Warenbahn geregelt.

In Abhängigkeit von den jeweils erforderlichen Profilkorrekturen kann es zu großen Differenzen zwischen den Öldrücken der verschiedenen Stützquellen kommen (z.B. von 3,5 bis 90 bar von Stützquelle zu Stützquellen). Dies führt, wie bereits angedeutet, zu Volumenstromdifferenzen an den Stützquellen. Zwischen dem rotierenden Walzenmantel und den Stützquellen entsteht durch die Ölscherung in Abhängigkeit von der Mantelgeschwindigkeit und der Ölspalthöhe, die wieder vom Volumenstrom, der Öltemperatur und dem Taschendruck abhängig ist. Reibung. Infolge der großen Druckunterschiede ergibt sich somit von einer Stützquelle zur anderen eine unterschiedlich hohe Reibleistung, die sich in Temperaturdifferenzen am Walzenmantel auswirkt. Diese Temperaturdifferenzen wirken sich wieder auf die Form des Walzenmantels aus und bringen somit einen das erzeugte Streckenlastprofil der Durchbiegungseinstellwalze beeinflussende Rückkopplungseffekt mit sich.

Da sich bei einer Druckentlastung an einer Stützquelle ein geringerer Volumenstrom einstellt, ergibt sich an dieser Stützquelle trotz einer betragsmäßig geringeren Reibleistung als bei höheren Drücken eine höhere Temperatur. Eine höhere Temperatur führt nun aber zu einer Ausdehnung des Walzenmantels, die sich in einer Streckenlasterhöhung im Walzenspalt auswirkt. Die Temperaturentwicklung wirkt sich also gegenläufig zur gewünschten Druckentlastung aus und ist somit unerwünscht. In Einzelfällen kann dies sogar zu einer Instabilität im Regelverhalten führen.

Diese Situation ist bereits in der EP 1279767 B1 beschrieben und soll auch für diese Erfindung grundlegend sein. Dort wurde durch die aufgrund des Kolbendrucks variierenden Drosselquerschnitte der Volumenström zu den Hydrostatiktaschen des Stützelementes gesteuert.

In den Ausgestaltungsbeispielen der EP 1279767 B1 hat sich in der Praxis jedoch herausgestellt, dass die benötigten Drossel- oder Kapillarenquerschnitte wegen der begrenzten Höhe des Stützelementes sehr klein sein müssen, um die gewünschte Drosselwirkung zu erzielen. Derart feine Bohrungen sind nur schwer herstellbar. Außerdem stellen sie ein Risiko für die Betriebssicherheit dar, weil sie durch kleinste Partikel im Druckfluid verstopfen können.

Ziel der Erfindung ist es, eine verbessertes und betriebssichereres Stützelement der eingangs genannten Art zu schaffen, wobei der Volumenstrom zumindest eines Teils des einer jeweiligen Hydrostatiktasche zugeführten Druckfluids in Abhängigkeit vom Kolbendruck des jeweiligen Stützelements variierbar bleibt.

Diese Aufgabe wird nach der Erfindung dadurch gelöst, dass die Drossel oder Kapillare spiral- oder schraubenlinienförmig angeordnet ist. Durch die spirai- oder schraubenlinienförmige Drossel oder Kapillare wird die wirksame Gesamtlänge bei begrenzter Höhe des Stützelemente enorm vergrößert. Die käpillare kann bei dem gleichen Strömungswiderstand verglichen mit herkömmlichen Kapillaren einen deutlich größeren Querschnitt besitzen. Die Verstopfungsgefahr einer solchen Drossel oder Kapillare ist dadurch nahezu ausgeschlossen.

Es ist von Vorteil, wenn die Kapillare in Form einer Nut in einem Ventilkörper vorgesehen ist. Eine solche Nut ist besonders einfach herstellbar.

Vorzugsweise ist der Ventilkörper in einer Ventilkörperführung axial verschiebbar angeordnet. Auf diese Weise kann die als Drossel wirkende Länge der Kapillare eingestellt werden. Dadurch ist der Volumenstrom über wenigstens eine variable Drossel in Abhängigkeit vom Kolbendruck des jeweiligen Stützelementes variierbar.

Bei einer bevorzugten praktischen Ausführungsform ist der Ventilkörper in der Ventilkörperführung zwischen einer ersten und einer zweiten Endlagenpositionen verschiebbar. In der ersten Endlagenposition ist die Drossel so weit wir möglich geöffnet und in der zweiten Endlagenposition ist die Drossel so weit wie möglich geschlossen. Man hat also zwei definierte Durchflusswerte, von denen ausgehend man die genaue Regelung des Volumenstroms zu den Hydrostatiktaschen vornehmen kann.

In einer alternativen bevorzugten Ausgestaltung ist die schraubenlinienförmige Kapillare in die Innenwandung der Ventilkörperführung eingebracht. In diesem Fall ist zwar der Aufwand zur Herstellung der Kapillare etwas größer, dafür kann der Ventilkörper aber einen einfachen Zylinder darstellen.

Mit Vorteil ist der Ventilkörper über eine Feder mit vorbestimmter Federsteifigkeit derart belastet, dass er sich bei drucklosem Kolben in der ersten Endlagenposition befindet. Durch eine für den Fachmann einfache Auswahl kann eine Federkennlinie vorgewählt werden, die eine sichere Steuerung des Ventils gewährleistet.

Beverzugt wirkt der Druck im Druckraum der Zylinder/Kolben-Einheit des Stützelementes auf den Ventilkörper in Richtung der zweiten Endiagenposition. Die Ausgestaltung einer Stirnfläche des Ventilkörpers als Druckfläche ist besonders einfach zu gestalten. Der Ventilkör per ist dann durch den Druck aus dem Druckraum unterhalb des Stützelementkolbens gegen die Federkraft in seiner Ventilkörperführung bewegbar.

Die Hydrostatiktaschen können insbesondere über den Druckraum des jeweiligen Stützelements versorgt sein, was bedeutet, dass die Drosseln bzw. Kapillaren zwischen diesem Druckraum und den betreffenden Hydrostatiktaschen vorgesehen sind. Eine jeweilige variable Drossel kann somit insbesondere zwischen den Druckraum des betreffenden Stützelements und die zugeordnete Hydrostatiktasche geschaltet sein.

Es ist von Vorteil, wenn die Ventilkörperführung zwischen der ersten und der zweiten Endposition des Ventilkörpers eine Druckfluid-Zuführleitung aufweist. Von der Zufuhrleitung wird das Druckfluid durch die Kapillare in die Hydrostatiktasche geführt. Je nach Stellung des Ventilkörpers ist die Länge der Kapillare verschieden, Ist der Druck im Kolben des Stützelementes groß, so ist auch die Länge der schraubenlinienförmigen Kapillare bis zur Hydrostatiktasche lang. Entsprechend geringer wird der Volumenstrom. Bei einer bevorzugten praktischen Ausführungsform ist die variable Drossel so ausgeführt, dass der betreffende Volumenstrom mit zunehmend kleiner werdenden Drücken im Druckraum zunehmend größer wird und umgekehrt. Durch eine entsprechende Ansteuerung der variablen Drosseln kann somit die Mischtemperatur wie in der EP 1279767 B1 beschrieben im Walzeninnern zumindest im Wesentlichen konstant gehalten werden.

Besonders vorteilhaft ist vorgesehen, dass die Druckfluid-Zuführleitung aus einem Druckraum, in dem auch der Stützelementkolben mit Druck beaufschlagbar ist, gespeist wird. Auf diese Weise muss nur eine Druckfluid-Haupteinspeisung pro Stützelement erfolgen.

Des Weiteren wird eine Durchbiegungseinstellwalze mit dem erfindungsgemäßen hydrostatischen Stützelement beansprucht.

Die Erfindung wird im Folgenden anhand von Ausführungsbeispielen unter Bezugnahme auf die Zeichnung näher erläutert; in dieser zeigen:
Figur 1 eine schematische geschnittene Teildarstellung einer Ausführungsform einer erfindungsgemäßen Durchbiegungseinstellwalze und
Figur 2 einen Schnitt durch den Stützelementkolben eines erfindungsgemäßen Stützelementes.

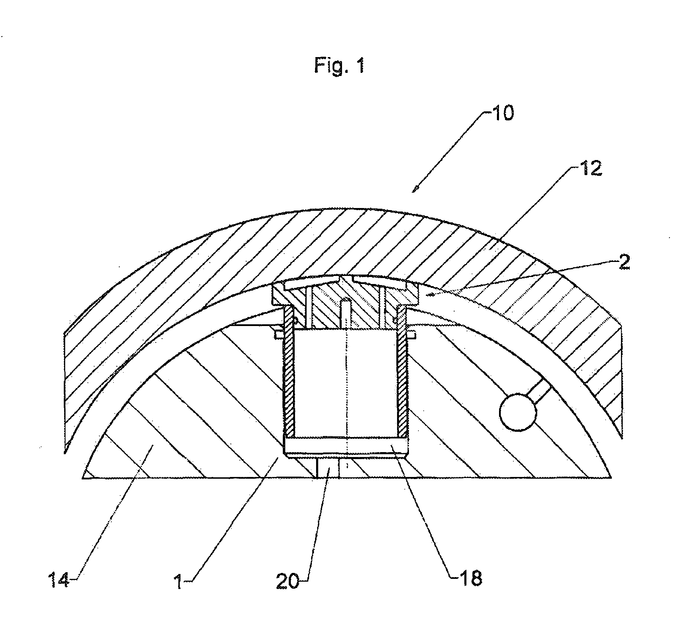

Figur 1 zeigt in schematischer geschnittener Teildarstellung eine beispielhafte Ausführungsform eines hydrostatischen Stützelementes 1 einer Durchbiegungseinstellwalze 10, die zur Behandlung einer Materialbahn wie insbesondere einer Papier- oder Kartonbahn in einem mit einher Gegenfiäche gebildeten Spalt (nicht gezeigt) dienen kann.

Die Durchbiegungseinstellwalze 10 umfasst einen umlaufenden Walzenmantel 12, ein den Walzenmantel 12 axial durchsetzendes drehfestes Joch 14 und mehrere in Richtung der Walzenachse hintereinander am Joch 14 angeordnete hydrostatische Stützelemente 1, von denen in der Figur 1 lediglich eines zu erkennen ist.

Die Stützelemente 1 sind jeweils durch eine druckfluidbetätigte Zylinder/Kolben-Einheit gebildet, die auf die Innenseite des Walzenmantels 12 eine jeweilige Stützkraft ausübt.

Die Stützelemente 1 können einzeln und/oder gruppenweise ansteuerbar sein, wodurch sich entsprechende, in Richtung der Walzenachse aufeinanderfolgende Watzendruckzonen ergeben.

Der Druckraum 18 eines jeweiligen Stützelements 1 ist über einen im Joch 14 vorgesehenen Kanal 20 mit Druckfluid beaufschlagbar.

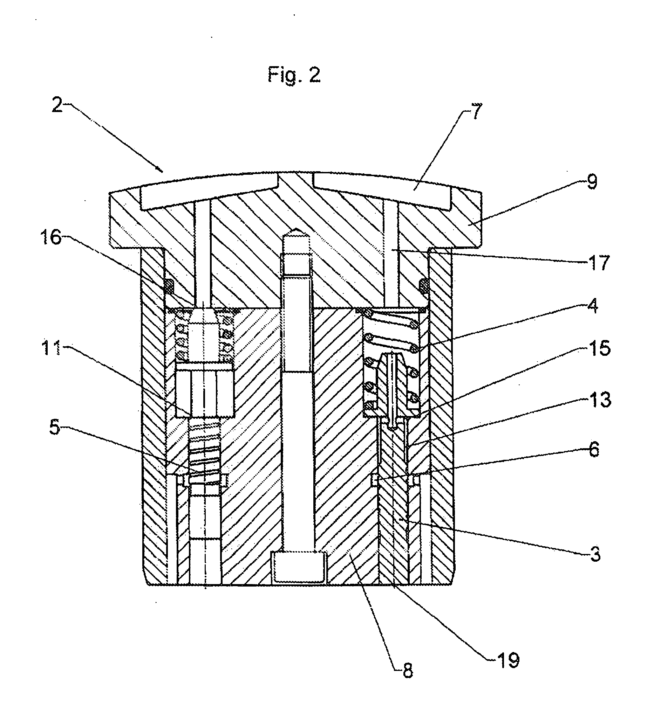

Figur 2 zeigt schließlich in vergrößerter Darstellung den Stützelementkolben 2 aus Figur 1, der dort nicht detailliert gezeigt ist. Die mantelseitigen Hydrostatiktaschen 7 werden jeweils über wenigstens eine Drossel oder Kapillare 11, 17 mit Druckfluid versorgt. Dabei sind diese Drosseln 11, 17 im vorliegenden Fall zwischen die Hydrostatiktaschen 7 und den Druckraum 18 geschaltet.

Im vorliegenden Fall besitzt ein Jeweiliges Stützelement 1 beilspielsweise jeweils vier Hydrostatiktaschen 7.

Der Volumenstrom des einer jeweiligen Hydrostatiktasche 7 zugeführten Druckfluids ist in Abhängigkeit vom in dem Druckraum 18 des Stützelements 1 vorherrschenden Kolbendruck variierbar. Dabei sind bei den verschiedenen Stützelementen 1 die betreffenden Volumenströme insbesondere so variierbar, dass sich eine zumindest im Wesentlichen konstante Mischtemperatur im Walzeninnern ergibt.

Dazu wird der jeweilige Volumenstrom über eine jeweilige variable Drossel 11 in Abhängigkeit vom Kolbendruck variiert. Wie anhand der Figur 2 zu erkennen ist, sind die variablen Drosseln 11 zwischen den Druckraum 18 und die jeweils zugeordnete Hydrostatiktasche 7 geschaltet.

Im vorliegenden Fall mündet in jede Hydrostatiktasche 7 jeweils eine Festdrossel 17, d.h. nicht variable Kapillare, die jeweils mit einer in den Druckraum 18 des Stützelements 16 mündenden variablen Drossel 11 in Reihe geschaltet ist.

Die variablen Drosseln 11 können jeweils ein Ventil umfassen oder als Ventil ausgeführt sein. Im vorliegenden Fall sind diese Ventile so ausgeführt, dass der betreffende Volumenstrom mit zunehmend kleiner werdenden Kolbendrücken zunehmend größer wird und umgekehrt.

Im vorliegenden Fall sind die variablen Drosseln 11 durch einen vom Kolbendruck beaufschlagten Ventilkörper 3 gesteuert, der in einer Bohrung, die als Ventilkörpertührung 13 dient, geführt ist. Der Ventilkörper 3 ist durch eine abgestützte Feder 4 in Richtung des Druckraums 18 belastet und über eine Druckfläche 19 durch den Kolbendruck im Druckraum 18 entgegen der Kraft der Feder 4 beaufschlagbar. Über die Druckfläche 19 ist der Ventilkörper 3 entsprechend der jeweiligen Druckbeaufschlagung in Schließrichtung oder in Öffnungsrichtung der ventilartigen variablen Drosseln 11 bewegbar.

Je nach Größe des Drucks im Kolbenraum 18 bewegt sich der Ventilkörper 3 mehr oder weniger innerhalb einer Wegstrecke zwischen einer ersten und einer zweiten Endlagenposition 15, 16. Der Ventilkörper 3 besitzt eine schraubenförmig umlaufende Nut 5. Diese Nut 5 bildet eine Kapillare 11 zwischen dem Ventilkörper 3 und der Ventilkörperführung 13.

Alternativ kann die schraubenförmige Nut 5 auch in der Wandung der Ventilkörperführung 13 eingebracht sein.

In jedem Fall ist in vorteilhafter Weise durch die schrauben- oder spiralförmige Anordnung der Nut 5 die Länge der Kapillare 11 sehr groß. Um einen benötigten Strömungswiderstand für das Drucköl zu erreichen, kann der Durchmesser der Kapillare 11 recht groß sein, relativ gesehen zu Ausführungen in Stand der Technik. Das bedeutet aber gleichzeitig eine geringere Gefahr von Verstopfungen durch im Drucköl mitgeführte Partikel.

Der Anschlusspunkt der Zuführleitung 6 in die Kapillare 11 befindet sich im Bereich der unteren und der oberen Endlagenposition 15, 16 des Ventilkörpers 3. Zur Vergleichmäßigung des Druckfluid-Übergangs ist das Ende des Zuführkanals 6 in dem Ausführungsbeispiel als ringförmiger Freistich in der Ventilkörperführung 13 ausgebildet. Durch eine Verschiebung des Ventilkörpers aufgrund des Drucks Im Kolbenraum 18 verändert sich auch die wirksame Länge der Kapillare 11 und somit der Volumenstrom des Druckfluids zu der wenigstens einen Hydrostatiktasche 7. In der Figur 2 ist der Ventilkörper 3 auf der rechten Seite in seiner ersten Endlagenposition 15 und der Ventilkörper 3 auf der linken Seite in seiner zweiten Endlagenposition 16 gezeichnet.

Bei einem hohen Druck im Druckraum 18 ist die Kapillare demnach relativ lang und bietet einen hohen Strömungswiderstand. Dadurch erhöht sich die Reibung des Mantels an der Oberfläche des Stützelementkopfes 9, was zu einer Erwärmung des Bereiches führt. Dies ist gewünscht, weil sich durch die Wärmeausdehnung des Mantels an dieser Stelle die Druckwirkung auf die zu behandelnde Bahn vergrößert wird.

Umgekehrt bietet die Kapillare einen kleinen Strömungswiderstand, wenn der Druck im Druckraum 18 gering ist. Das bedeutet, dass ein größerer Volumenstrom des Druckfluids in die Hydrostatiktaschen 7 gelangt und für eine bessere Kühlung sorgt.

Die variable Drossel 11 kann insbesondere so ausgeführt und/oder angesteuert sein, dass sie bei Kolbendrücken oberhalb eines vorgebbare oberen Grenzwertes eine maximale Länge hat und somit zumindest im Wesentlichen ganz geschlossen und/oder bei Kolbendrücken unterhalb eines vorgebbaren unteren Grenzwerts einen minimale Länge hat und zumindest im Wesentlichen ganz geöffnet ist.

Von den dargestellten Ausführungsformen kann in vielfacher Hinsicht abgewichen werden, ohne den Grundgedanken der Erfindung zu verlassen. Insbesondere kann es sinnvoll sein, wenn mit der variablen Drossel Festdrosseln parallel oder in Reihe geschaltet sind. Durch eine solche geschaltete Fest- oder Konstantdrossel kann die variable Wirkung der Drossel 11, die vorzugsweise über den Öffnungsweg eines Ventilkörpers erfolgt, fein abgestimmt werden.

### Bezugszeichenliste

- 1: Hydrostatisches Stützelement
- 2: Stützelementkolben
- 3: Ventilkörper
- 4: Feder
- 5: Nut
- 6: Zuführleitung
- 7: Hydroslatiktasche
- 8: Grundkörper
- 9: Kopf
- 10: Durchbiegungseinstellwalze
- 11: (variable) Drossel, Kapillare
- 12: Walzenmantel
- 13: Ventilkörperführung
- 14: Joch
- 15: erste Endlagenposition
- 16: zweite Endlagenposition
- 17: Festdrossel
- 18: Druckraum
- 19: Druckfläche
- 20: Kanal

## Patentansprüche

1. Hydrostatisches Stützelement, das geeignet ist, in einer Durchbiegungseinstellwalze (10) in einem einen umlaufenden Walzenmantel (12) axial durchsetzenden drehfesten Joch (14) als eine druckfluidbetätigte Zylinder/Kolben-Einheit eine Stützkraft auf die Innenseite des Walzenmantels (12) auszuüben, wobei Hydrostatiktaschen (7) des hydrostatischen Stützelements (1) jeweils über wenisgatens eine Drossel oder Kapillare (11, 17) mit Druckfluid versorgt werden, **dadurch gekennzeichnet, dass** die Drossel oder Kapillare (11) schraubenlinienförmig angeordnet ist.

2. Hydrostatisches Stützelement nach Anspruch 1, **dadurch gekennzeichnet, dass** die Kapillare in Form einer Nut (5) in einem Ventilkörper (3) vorgesehen ist.

3. Hydrostatisches Stützelement nach Anspruch 2, **dadurch gekennzeichnet, dass** der Ventilkörper (3) in einer Ventilkörperführung (13) axial verschiebbar angeordnet ist.

4. Hydrostatisches Stützelement nach Anspruch 3, **dadurch gekennzeichnet, dass** der Ventilkörper (3) in der Ventifkörperführung (13) zwischen einer ersten und einer zweiten Endlagenposition (15, 16) verschiebbar ist.

5. Hydrostatisches Stützelement nach Anspruch 1, **dadurch gekennzeichnet, dass** die schraubenlinienförmige Kapillare (11) in die Wandung der Ventilkörperführung (13) eingebracht ist.

6. Hydrostatisches Stützelement nach einem der Ansprüche 4 bis 5, **dadurch gekennzeichnet, dass** der Ventilkörper (3) über eine Feder (4) mit vorbestimmter Federsteifigkeit derart belastet ist, dass er sich bei drucklosem Kolben in der ersten Endlagenposition (15) befindet.

7. Hydrostatisches Stützelement nach einem der Ansprüche 4 bis 6, **dadurch gekennzeichnet, dass** der Druck in der Zylinder/KolbenEinheit auf den Ventilkörper (3) in Richtung der zweiten Endlagenposition (16) wirkt.

8. Hydrostatisches Stützelement gemäß Anspruch 4 bis 7, **dadurch gekennzeichnet, dass** der Ventilkörper (3) zwischen der ersten und der zweiten Endposition (15, 16) des Ventilkörpers (3) eine Druckfluid-Zuführleitung (6) aufweist.

9. Hydrostatisches Stützelement gemäß Anspruch 8, **dadurch gekennzeichnet, dass** die Druckfluid-Zuführleitung (6) aus einem Druckraum, in dem auch der Stützelementkolben (2) mit Druck beaufschlagbar ist, gespeist wird.

10. Durchbiegungseinstellwalze, **dadurch gekennzeichnet, dass** sie wenigstens ein hydrostatisches Stützelement (1) gemäß einem der Ansprüche 1 bis 9 umfasst.

## Claims

1. Hydrostatic supporting element which, in a controlled deflection roll (10), in a rotationally fixed yoke (14) passing axially through a revolving roll shell (12), is suitable as a cylinder/piston unit actuated by compressed fluid to exert a supporting force on the inner side of the roll shell (12), hydrostatic pockets (7) of the hydrostatic supporting element (1) in each case being supplied with pressurized fluid via at least one throttle or capillary (11, 17),
**characterized in that**
the throttle or capillary (11) is arranged in the form of a helix.

2. Hydrostatic supporting element according to Claim 1,
**characterized in that**
the capillary is provided in the form of a groove (5) in a valve body (3).

3. Hydrostatic supporting element according to Claim 2,
**characterized in that**
the valve body (3) is arranged such that it can be displaced axially in a valve body guide (13).

4. Hydrostatic supporting element according to Claim 3,
**characterized in that**
the valve body (3) can be displaced in the valve body guide (13) between a first and a second end position (15, 60).

5. Hydrostatic supporting element according to Claim 1,
**characterized in that**
the helical capillary (11) is introduced into the wall of the valve body guide (13).

6. Hydrostatic supporting element according to either of Claims 4 and 5,
**characterized in that**
the valve body (3) is loaded by a spring (4) with a predetermined spring stiffness in such a way that, when the piston is unpressurized, the said valve body is located in the first end position (15).

7. Hydrostatic supporting element according to one of Claims 4 to 6,
**characterized in that**
the pressure in the cylinder/piston unit acts on the valve body (3) in the direction of the second end position (16).

8. Hydrostatic supporting element according to Claims 4 to 7,
**characterized in that**
the valve body (3) has a pressurized fluid feed line (6) between the first and the second end position (15, 16) of the valve body (3).

9. Hydrostatic supporting element according to Claim 8,
**characterized in that**
the pressurized fluid feed line (6) is fed from a pressure chamber, in which the supporting element piston (2) can also be pressurized.

10. Controlled deflection roll,
**characterized in that**
it comprises at least one hydrostatic supporting element (1) according to one of Claims 1 to 9.

## Revendications

1. Elément d'appui hydrostatique, approprié pour exercer une force d'appui sur le côté intérieur d'une enveloppe de rouleau (12) dans un rouleau d'ajustement de la flexion (10) dans une culasse (14) solidaire en rotation traversant axialement l'enveloppe de rouleau périphérique (12), la culasse étant réalisée sous forme d'unité cylindre-piston à commande par fluide sous pression, les poches de fluide hydrostatique (7) de l'élément d'appui hydrostatique (1) étant alimentées chacune par le biais d'au moins un étranglement ou un capillaire (11, 17) en fluide sous pression, **caractérisé en ce que** l'étranglement ou le capillaire (11) est disposé sous forme hélicoïdale.

2. Elément d'appui hydrostatique selon la revendication 1, **caractérisé en ce que** le capillaire est prévu sous forme de rainure (5) dans un corps de soupape (3).

3. Elément d'appui hydrostatique selon la revendication 2, **caractérisé en ce que** le corps de soupape (3) est disposé de manière déplaçable axialement dans un guide du corps de soupape (13).

4. Elément d'appui hydrostatique selon la revendication 3, **caractérisé en ce que** le corps de soupape (3) peut être déplacé dans le guide du corps de soupape (13) entre une première et une deuxième position de fin de course (15, 16).

5. Elément d'appui hydrostatique selon la revendication 1, **caractérisé en ce que** le capillaire (11) de forme hélicoïdale est incorporé dans la paroi du guide de corps de soupape (13).

6. Elément d'appui hydrostatique selon l'une quelconque des revendications 4 à 5,
**caractérisé en ce que** le corps de soupape (3) est sollicité par le biais d'un ressort (4) avec une rigidité de ressort prédéterminée de telle sorte qu'il se trouve dans la première position de fin de course (15) lorsque le piston n'est pas sollicité en pression.

7. Elément d'appui hydrostatique selon l'une quelconque des revendications 4 à 6, **caractérisé en ce que** la pression dans l'unité cylindre-piston agit sur le corps de soupape (3) dans la direction de la deuxième position de fin de course (16).

8. Elément d'appui hydrostatique selon les revendications 4 à 7, **caractérisé en ce que** le corps de soupape (3) présente une conduite d'alimentation en fluide sous pression (6) entre la première et la deuxième position de fin de course (15, 16) du corps de soupape (3).

9. Elément d'appui hydrostatique selon la revendication 8, **caractérisé en ce que** la conduite d'alimentation en fluide sous pression (6) est alimentée à partir d'un espace de pression dans lequel le piston de l'élément d'appui (2) peut aussi être sollicité en pression.

10. Rouleau d'ajustement de la flexion, **caractérisé en ce qu'**il comprend au moins un élément d'appui hydrostatique (1) selon l'une quelconque des revendications 1 à 9.
